# EUROPÄISCHE PATENTSCHRIFT

(11) **EP 0 791 452 B1**
(45) Veröffentlichungstag und Bekanntmachung des Hinweises auf die Patenterteilung: **02.07.2003**
(21) Anmeldenummer: 96118104.7
(22) Anmeldetag: 12.11.1996
(51) Int. Cl.: B29K 7/00, F16F 15/12, C10M 105/00, C10M 111/04, C10M 169/04, F16F 1/38

(54) **Verfahren zum Einpressen eines überdimensionierten Elastomerringes in einen Ringspalt**
Method to press an oversized elastomere ring into an annular gap
Méthode pour presser un anneau élastomère surdimensionné dans un espace annulaire

(30) Priorität: 20.02.1996 DE 19606171
(43) Veröffentlichungstag der Anmeldung: 27.08.1997
(73) Patentinhaber: Carl Freudenberg KG, 69469 Weinheim (DE)
(72) Erfinder: Schwerdt, Hans Werner, 69514 Laudenbach (DE)

(56) Entgegenhaltungen:
- EP-A- 0 498 417
- EP-A- 0 738 775
- DE-A- 4 444 137
- DE-C- 4 235 074

## Beschreibung

Die Erfindung befaßt sich mit einem Verfahren zum Einpressen eines überdimensionierten, gummielastisch verformbaren Elastomerringes aus polymerem Werkstoff in den Ringspalt zwischen zwei unnachgiebigen, insbesondere metallischen Maschinenteilen. Diese sind mit radialem Abstand konzentrisch zueinander angeordnet, wodurch sich der genannte Ringspalt bildet. Die Maschinenteile sind ferner axial gegeneinander verschiebbar.

Bei dem Verfahren geht man so vor, daß man den überdimensionierten Ring und/oder die den Ringspalt begrenzenden Flächen der Maschinenteile mit einem Gleitmittel benetzt und den Ring nachfolgend verformt und in den Ringspalt einpreßt.

Hier und im folgenden soll unter dem Begriff "überdimensioniert" verstanden werden, daß der Elastomerring eine größere radiale Erstreckung (Dicke) aufweist als der Ringspalt, so daß jener während des Einpressens eine dreidimensionale Verformung ohne wesentliche Volumenänderung erfährt infolge der Inkompressibilität des Ring-Werkstoffes.

Gemäß DE 42 35 074 C1 wird ein solches Verfahren beispielsweise zur Herstellung von "eingeschossenen" Torsionsschwingungsdämpfern angewandt, wobei ein Nabenring und ein den Nabenring mit radialem Abstand umschließender Schwungring vorliegen, wobei der Naben- und der Schwungring aus einem metallischen Werkstoff bestehen und wobei in den durch besagten Abstand gebildeten Spalt ein gummielastischer Federkörper eingeschossen wird, welcher im Sinne der obigen Begriffsdefinition überdimensioniert ist.

Um die während dieses Vorganges auftretenden Reibungskräfte zwischen den metallischen Bauteilen und dem gummielastischen Ring zu vermindern, wird in der zitierten Druckschrift vorgeschlagen, daß der Federkörper und/oder die den Spalt begrenzenden Oberflächen von Naben- und/oder Schwungring vor dem Einschießen des Federkörpers mit einer Wasser/Salz-Lösung als Gleitmittel benetzt werden. Die Verwendung eines solchermaßen gekennzeichneten Gleitmittels soll zusätzlich die allmähliche Korrosion der damit benetzten metallischen Bauteile bewirken, wodurch deren Oberflächenrauhigkeit und damit deren Haftbeiwert vergrößert wird, so daß sich ein Haftschluß einstellt, welcher demjenigen eines Dämpfers mit vulkanisiertem Federkörper entspricht.

Die reibungsvermindernde Wirkung dieses vorbekannten Gleitmittels beim Einpressen ist aufgrund seiner wäßrigen Natur und dadurch niedrigen Viskosität äußerst begrenzt. Jedoch steht bei diesem Stand der Technik die erzeugbare Haftwirkung innerhalb des fertigen Schwingungsdämpfers im Vordergrund.

Die Viskosität ist jedoch ein wesentlicher Parameter für ein Gleitmittel:

So ist dessen Gleitwirkung beim Einpressen um so besser, je höher seine Viskosität ist.

Die ebenfalls erwünschte, möglichst umfassende Benetzung mit der beim Einpreßvorgang durch Reibung beanspruchten Maschinenteile mit Gleitmittel ist jedoch besser, wenn dessen Viskosität geringer ist.

Ferner reduziert sich mit abnehmender Viskosität des Gleitmittels der Effekt, daß unerwünschte, den Kraftschluß zwischen elastomerem und metallischem Werkstoff vermindernde Gleitmittelrückstände im Ringspalt verbleiben, und zwar in den Trennebenen zwischen dem elastomeren Ring und den metallischen Maschinenteilen. Im Idealfall ist das Gleitmittel nach einiger Zeit vollständig in das elastomere Material des überdimensionierten Ringes eingedrungen.

Die Aufgabe der Erfindung ist es, ein gattungsgemäßes Einpreßverfahren zur Herstellung eines Maschinenteils anzugeben, bei welchem ein Gleitmittel verwendet wird, durch dessen Zusammensetzung und Eigenschaften das genannte Dilemma zwischen den positiven und negativen Auswirkungen höherer und niederer Viskositätswerte überwunden werden kann. Dabei sollen beim Einpreßvorgang die Gleitwirkung und die Benetzung der aneinanderzufügenden Bauteile aus Metall und Elastomer optimiert werden. Das Gleitmittel soll in der Lage sein, spätestens 48 Stunden nach dem Auftragen in das elastomere Material des Ringes vollständig einzudiffundieren.

Die Lösung dieser Aufgabe besteht in einem Verfahren mit den Merkmalen des Oberbegriff des ersten Patentanspruchs und ist durch dessen kennzeichnende Merkmale definiert. Vorteilhafte Ausgestaltungen sind in den Unteransprüchen angegeben.

Bei der Durchführung des Verfahrens ist es selbstverständlich, daß man die Auftragsmenge für das Gleitmittel so ausreichend wie nötig und so gering wie möglich wählt, um einerseits vor dem Einbau eine möglichst rasche und gleichmäßige Benetzung der Bauteile an ihren durch das Einpressen mechanisch beanspruchten Flächen zu erzielen und um andererseits verbleibende Rückstände nach dem Einbau zu minimieren, um ein vollständiges Eindiffundieren des Gleitmittels in den gummielastischen Ring zu gewährleisten.

Der letztere Effekt kann so natürlich nur erzielt werden, wenn das Gleitmittel aufgrund seiner chemischen und physikalischen Zusammensetzung überhaupt in der Lage ist, in das gummielastisch verformbare, polymere Material des Ringes in genügendem Maße einzudringen. Deshalb schlägt die Erfindung die Verwendung eines organischen, nicht wasserlöslichen Gleitmittels vor, welches sich aus im Handel leicht erhältlichen Komponenten zusammensetzt: Man wählt hierzu in einer Menge von 60 bis 90 Vol.-% polymere Ester der Phthalsäure und/oder der Sebacinsäure und/oder der Adipinsäure, jeweils mit einer Dichte d20/4 von 0,95 bis 1,05.

Zur Förderung der später, nach dem Einpressen, im zusammengebauten Zustand des Erzeugnisses stattfindenden Eindiffusion des Gleitmittels in den gummielastischen Werkstoff des Ringes setzt man als weitere Komponente dem Gleitmittel, vor dessen Auftragen, 40 bis 10 Vol.-% eines aliphatischen Kohlenwasserstoffs mit einer Siedepunkt von 60 bis 150°C zu.

Durch Auswahl von Art und Menge der Einzelkomponenten, deren Viskosität dem Fachmann aus den ihm zugänglichen Produktbeschreibungen bekannt sind, ist dieser nunmehr mühelos in der Lage, im Rahmen der erfindungsgemäßen Vorgaben ein Gleitmittel herzustellen, welches eine Viskosität von 200 bis 4 500 mPa.s aufweist. Dieser Viskositätsbereich ist ein weiteres wesentliches Kennzeichen des erfindungsgemäß verwendeten Gleitmittels.

Als besonders vorteilhafte Werte wurden hierbei, unter Berücksichtigung der Optimierung der Reibungsverminderung einerseits und der Eindringgeschwindigkeit in das Ringmaterial andererseits, solche zwischen 500 und 2 500 mPa.s gefunden.

Bevorzugt wählt man wegen ihrer Verfügbarkeit und Preisgünstigkeit als diffusionsfördernde Komponenten Alkohole. Hiermit ist gewährleistet, daß das Gleitmittel spätestens nach 48 Stunden bei sparsamster Auftragung vollständig in den elastomeren Ring eindiffundiert ist und daher keine negativen Einwirkungen auf den Kraftschluß zwischen dem Ring und den metallischen Maschinenbauteilen mehr ausübt. Als Beispiel sei Isopropanol genannt, welches besonders preiswert erhältlich ist.

Ebenso wirksam, jedoch unter Berücksichtigung des vermehrt an Bedeutung gewinnenden Arbeitsschutzes besonders vorteilhaft, ist die Verwendung von Ethylenglykolmonoethylether oder Ethylenglykolmonobutylether, deren Siedepunkt jeweils erst um 130°C liegt und die daher einen niedrigen Dampfdruck aufweisen. Hiermit wird die Arbeitsplatzbelastung mit Dämpfen gegenüber der Verwendung von Alkoholen deutlich verringert.

In der Regel ist es verfahrenstechnisch von Vorteil, zur Einstellung der gewünschten Viskosität des Gleitmittels zwei der genannten polymeren Ester miteinander zu mischen. Man erhält dadurch eine große zur Verfügung stehende Variationsbreite an einstellbaren Viskositätswerten.

Bei geringerer Berücksichtigung der Material- und Herstellungskosten kann es jedoch im einen oder anderen Fall auch von Vorteil sein, eine Gleitmittelzusammensetzung aus allen drei genannten Estertypen zu komponieren.

Um sicherzustellen, daß eine möglichst geringe, jedoch ausreichende Menge an Gleitmittel für die genannten Benetzungs-, Schmier- und Eindiffusions-Vorgänge zur Verfügung steht, hat es sich gezeigt, daß es von Vorteil sein kann, wenn man nur die auf der bezüglich der axial verlaufenden Einpreßrichtung nach vorne zeigende Stirnfläche des Ringes aus gummielastischem Material mit dem Gleitmittel benetzt.

Das Verfahren mit allen genannten und daraus herleitbaren Varianten eignet sich zur Herstellung aller Erzeugnisse aus Maschinenteilen, welche unnachgiebige, konzentrisch zueinander angeordnete, insbesondere metallische Bauteile aufweisen, die axial zueinander beweglich sind und die einen radialen Ringspalt zwischen sich aufweisen, der kraftschlüssig durch einen Ring aus gummielastisch verformbaren, polymeren Werkstoff verschlossen ist, so z.B. für Fluidblocs, Silentblocs, Einknöpflager, Gummibuchsen, elastische Gelenke, Kugelgelenke, Spurstangenköpfe, Gummiwalzen oder Einpreßringe.

Als die Bauteile mit den größten Anforderungen an bauliche und mechanische Präzision sind insbesondere die Torsionsschwingungsdämpfer zu nennen, deren Zusammenbau durch das erfindungsgemäße Verfahren einfach, kostengünstig, ohne nennenswerte Kontamination der Arbeitsplatzes und ohne Einbußen bezüglich des Kraftschlusses am fertigen Erzeugnis erfolgen kann.

## Patentansprüche

1. Verfahren zum Einpressen eines überdimensionierten Ringes aus einem gummielastisch verformbaren, polymeren Werkstoff in den durch den radialen Abstand gebildeten Ringspalt zwischen zwei unnachgiebigen, insbesondere metallischen, konzentrisch zueinander angeordneten und axial gegeneinander verschiebbaren Maschinenteilen, wobei man den Ring und/oder die den Ringspalt begrenzenden Flächen der Maschinenteile mit einem Gleitmittel benetzt und wobei man den Ring nachfolgend verformt und in den Ringspalt einpreßt,
**dadurch gekennzeichnet, daß** man ein nicht wasserlösliches, organisches Gleitmittel verwendet, welches zu 60 bis 90 Vol-%. aus einem polymeren Ester der Phthalsäure und/oder der Sebacinsäure und/oder der Adipinsäure besteht, wobei man Ester der Dichte d20/4 von 0,95 bis 1,05 auswählt, daß man hierzu als Diffusionsförderer 40 bis 10 Vol.-% eines aliphatischen Kohlenwasserstoffs mit einem Siedepunkt von 60 bis 150°C zusetzt und daß man durch Auswahl von Art und Menge aller Komponenten des Gleitmittels dieses auf eine Viskosität von 200 mPa.s bis 4 500 mPa.s einstellt.

2. Verfahren nach Anspruch 1, **dadurch gekennzeichnet, daß** man als Diffusionsförderer einen Alkohol verwendet.

3. Verfahren nach Anspruch 1, **dadurch gekennzeichnet, daß** man als Diffusionsförderer Ethylenglykolmonoethylether oder Ethylenglykolmonobutylether verwendet.

4. Verfahren nach einem der Ansprüche 1 bis 3, **dadurch gekennzeichnet, daß** man mindestens zwei verschiedene polymere Ester einsetzt.

5. Verfahren nach einem der vorhergehenden Ansprüche, **dadurch gekennzeichnet, daß** man nur die auf der bezüglich der Einpreßrichtung nach vorne zeigende Stirnfläche des gummielastischen Ringes mit dem Gleitmittel benetzt.

6. Verfahren nach einem der vorhergehenden Ansprüche, dadurch gekenn zeichnet, daß man es zur Herstellung eines Torsionsschwingungsdämpfers erwendet.

## Claims

1. A method for pressing an oversized ring made of an elastomerically deformable, polymeric material into the annular gap formed by the radial distance between two unyielding, in particular metallic machine parts which are arranged concentrically in relation to each other and can be displaced axially with respect to each other, the ring and/or the surfaces of the machine parts bounding the annular gap being wetted with a lubricant and the ring subsequently being deformed and pressed into the annular gap, **characterized in that** an organic lubricant which is water-insoluble and consists in respect of 60 to 90% by volume of a polymeric ester of phthalic acid and/or sebacic acid and/or adipic acid is used, esters of the density d20/4 of from 0.95 to 1.05 being selected, **in that** 40 to 10% by volume of an aliphatic hydrocarbon with a boiling point of from 60 to 150°C is added as a diffusion promoter and **in that**, by selecting the type and amount of all the components of the lubricant, the latter is set to a viscosity of from 200 mPa.s to 4500 mPa.s.

2. A method according to claim 1, **characterized in that** an alcohol is used as the diffusion promoter.

3. A method according to claim 1, **characterized in that** ethylene glycol monoethyl ether or ethylene glycol monobutyl ether is used as the diffusion promoter.

4. A method according to any one of claims 1 to 3, **characterized in that** at least two different polymeric esters are used.

5. A method according to any one of the preceding claims, **characterized in that** only the end face of the elastomeric ring facing forwards with respect to the pressing-in direction is wetted with the lubricant.

6. A method according to any one of the preceding claims, **characterized in that** it is used for producing a torsional vibration damper.

## Revendications

1. Procédé pour presser un anneau surdimensionné formé d'une matière polymère élastomère déformable dans l'espace annulaire formé par la distance radiale entre deux pièces de machine inflexibles, notamment métalliques, concentriques l'une par rapport à l'autre et pouvant effectuer un déplacement axial l'une par rapport à l'autre, dans lequel on mouille l'anneau et/ou les surfaces des pièces de machine limitant l'espace annulaire avec un lubrifiant et dans lequel on déforme ensuite l'anneau et on le presse dans l'espace annulaire, **caractérisé en ce qu'**on utilise un lubrifiant organique non soluble dans l'eau composé, dans une proportion allant de 60 à 90 pour cent en volume, d'un ester polymère de l'acide phtalique et/ou de l'acide sébacique et/ou de l'acide adipique, des esters de densité d20/4 comprise entre 0,95 et 1,05 étant sélectionnés, **en ce que** l'on ajoute à cet ester, en tant qu'activateur de diffusion, 40 à 10 pour cent en volume d'un hydrocarbure aliphatique ayant un point d'ébullition compris entre 60 et 150°C, et **en ce que** l'on ajuste la viscosité du lubrifiant, en sélectionnant le type et la quantité de tous ses composants, de manière à ce qu'elle soit comprise entre 200 mPa.s et 4.500 mPa.s.

2. Procédé selon la revendication 1, **caractérisé en ce que** l'on utilise un alcool en tant qu'activateur de diffusion.

3. Procédé selon la revendication 1, **caractérisé en ce que** l'on utilise de l'éthylène glycol monoéthyl éther ou de l'éthylène glycol monobutyl éther en tant qu'activateur de diffusion.

4. Procédé selon l'une des revendications 1 à 3, **caractérisé en ce que** l'on utilise au moins deux esters polymères différents.

5. Procédé selon l'une quelconque des revendications précédentes, **caractérisé en ce que** l'on mouille, avec le lubrifiant, uniquement la surface frontale de l'anneau élastomère qui est dirigée vers l'avant par rapport à la direction dans laquelle on presse.

6. Procédé selon l'une quelconque des revendications précédentes, **caractérisé en ce qu'**on l'utilise pour la fabrication d'un amortisseur de vibrations torsionnelles.
